# FASCICULE DE BREVET EUROPEEN

(11) **EP 1 971 986 B1**
(45) Date de publication et mention de la délivrance du brevet: **11.05.2011**
(21) Numéro de dépôt: 06847067.3
(22) Date de dépôt: 19.12.2006
(51) Int. Cl.: G21C 3/62, G21C 21/02

(54) **PROCEDE DE FABRICATION D'UN MATERIAU DENSE POUR COMBUSTIBLE NUCLEAIRE**
VERFAHREN ZUR HERSTELLUNG EINES DICHTEN MATERIALS FÜR NUKLEARBRENNSTOFF
METHOD FOR MAKING A DENSE MATERIAL FOR NUCLEAR FUEL

(30) Priorité: 19.12.2005 FR 0512890
(43) Date de publication de la demande: 24.09.2008
(73) Titulaire: Commissariat à l'Énergie Atomique et aux Énergies Alternatives, 75015 Paris (FR)
(72) Inventeur: SORNAY, Philippe, 04100 Manosque (FR); BERTRAND, Eric, 13090 Aix-en-Provence (FR)
(74) Mandataire: Jelsch, Emmanuel Edwin
(86) Numéro de dépôt international: PCT/FR2006/002784
(87) Numéro de publication internationale: WO 2007/071842

(56) Documents cités:
- EP-A- 0 249 549
- DE-A1- 3 930 252
- FR-A- 1 407 497
- FR-A- 2 861 888
- US-A- 4 512 939
- US-B1- 6 235 223

## Description

### DOMAINE TECHNIQUE

La présente invention se rapporte à un procédé de fabrication d'un matériau dense à partir d'au moins deux poudres, chacune contenant au moins du dioxyde d'uranium UO₂, obtenues par des procédés de synthèse différents, ledit procédé comprenant la fabrication intermédiaire d'au moins une matière particulaire aux propriétés de compressibilité et de frittabilité originales. A l'issue d'un tel procédé, on obtient en particulier un matériau dense dont la masse volumique est constante quelles que soient les conditions de départ que sont l'état d'agglomération et d'agrégation des poudres utilisées, et quelle que soit la contrainte de mise en forme appliquée à la matière particulaire intermédiaire lors de son compactage en préparation d'un frittage final.

L'invention s'applique, plus particulièrement, à l'utilisation dudit matériau dense dans la fabrication de combustible nucléaire, sous forme de pastilles ou caramels ou autres formes.

### ETAT DE LA TECHNIQUE

Les poudres d'oxydes, en particulier les poudres d'oxydes d'uranium (dont le dioxyde d'uranium) mises en oeuvre pour fabriquer les éléments de combustible pour les réacteurs nucléaires, se présentent généralement sous forme de cristallites dont le diamètre moyen varie de 0,08 à 0,5 µm. Ces cristallites sont plus ou moins fortement liés afin de former des agrégats qui sont à leur tour plus ou moins fortement liés entre eux pour former des agglomérats. D'une façon générale, le diamètre moyen des agrégats varie de quelques micromètres à quelques dizaines de micromètres, par exemple de 2 à 60 µm, et le diamètre moyen des agglomérats varie de quelques micromètres à quelques centaines de micromètres, par exemple de 2 à 700 µm.

Afin de réaliser du combustible nucléaire sous forme de pastille ou toute autre forme à partir de telles poudres d'oxyde, plusieurs étapes de fabrication sont généralement nécessaires, à savoir les étapes successives suivantes :
i) Une poudre d'oxyde est introduite dans un moule ou matrice de pressage. Il est généralement nécessaire que la poudre occupe l'ensemble du volume qui lui est accessible dans ce moule, afin de favoriser l'obtention ultérieure d'un matériau compact et sain (absence de défauts d'aspect et/ ou fissure(s) débouchant ou non sur la surface) et présentant le minimum de porosité. Cette aptitude que possède une poudre à remplir complètement un moule est appelée coulabilité. Elle est très variable d'une poudre à l'autre. Pour obtenir une coulabilité suffisante, un prétraitement de la poudre peut être nécessaire (par exemple par un procédé de granulation, que ce soit par granulation par atomisation ou par granulation mécanique),
ii) On applique ensuite sur la poudre contenue dans le moule une contrainte de mise en forme, par exemple en réalisant une mise en forme par pressage uniaxial à froid, afin de compacter cette poudre. Pour les poudres d'oxydes nucléaires, cette contrainte est le plus souvent de 200 à 600 MPa. A l'issue de cette étape de compactage, on obtient une ébauche, en matériau compact, du combustible nucléaire, dite ébauche crue. Le plus souvent cette ébauche est sous forme de pastille, mais toute autre forme est possible. Cette ébauche présente une cohésion suffisante pour qu'elle puisse être manipulée lors des opérations ultérieures de fabrication de combustible nucléaire, sous forme de pastilles ou caramels ou autres formes. La compressibilité de la poudre, que l'on peut mesurer, est la courbe donnant l'évolution de la masse volumique (en g/cm³) du matériau dense en fonction de la contrainte appliquée (en MPa). La compressibilité est donc une notion relative, dépendant des conditions opératoires, en particulier si on ajoute du lubrifiant à la poudre ou si on lubrifie le moule à l'aide d'un spray de lubrifiant par exemple avant chaque compaction. On peut comparer la compressibilité de deux poudres, toutes choses égales par ailleurs. On peut à cet égard faire référence à la norme NF EN 725-10.
iii) L'ébauche crue obtenue précédemment est alors densifiée et sa cohésion est augmentée par l'application d'au moins un cycle de frittage qui consiste généralement à soumettre la pastille (ou toute autre forme) à une variation de température et/ou de pression en fonction du temps, ainsi qu'il est connu de l'homme du métier. Bien entendu, d'autres paramètres peuvent intervenir sur le cycle de frittage telle que l'atmosphère, la présence d'impuretés... A l'issue de ce cycle de frittage, on obtient une ébauche frittée, en matériau dense, d'une densité qui est supérieure à la densité de l'ébauche crue. Pour les oxydes d'usage nucléaire, le cycle de frittage est généralement le suivant : une montée en température jusqu'à la température de frittage, généralement aux environs de 1600°C, suivie d'un maintien en température à cette température de frittage, généralement de quelques heures, le plus souvent de quatre heures. La frittabilité d'une poudre est la courbe donnant l'évolution de la masse volumique de l'ébauche frittée en fonction de la masse volumique de l'ébauche crue. La frittabilité est donc une notion relative, dépendant des conditions opératoires. On peut comparer la frittabilité de deux poudres, toutes choses égales par ailleurs. On peut à cet égard faire référence à la norme B42-011.
iv) Enfin, il reste encore à donner à cette ébauche frittée les dimensions nécessaires en vue de son usage en tant que pastille (ou toute autre forme) de combustible nucléaire. A cet effet, il est généralement nécessaire d'usiner l'ébauche frittée, ce qui consiste en général à lui enlever de la matière afin de la « mettre à la côte » et ainsi obtenir une pastille (ou toute autre forme) de combustible nucléaire de forme et de dimensions propres à son utilisation en réacteur nucléaire. Les raisons des écarts à la côte sont généralement, pour une pastille qui est la forme la plus couramment utilisée, une maîtrise insuffisante du diamètre moyen par rapport à l'intervalle spécifié et un écart à la cylindricité provenant du gradient de contraintes créé dans l'ébauche crue lors du pressage uniaxial.

La demande de brevet FR 1 407 497 a pour objet un procédé pour la fabrication de comprimés frittés en UO₂ qui comporte le mélange intime de UO₂ à aptitude élevée au frittage en proportion de 1 à 10% en poids avec du UO₂ cuit à température élevée, à faible aptitude au frittage, finement divisé, la compression du mélange obtenu pour former des agglomérés sous une pression d'au moins 1 400 kg/cm², et le frittage des agglomérés en atmosphère réductrice.

De par la demande de brevet FR 2 861 888, il est connu un procédé de fabrication de pastilles de combustible nucléaire qui consiste à préparer, à partir d'une poudre de dioxyde d'uranium, une matière particulaire aux propriétés déterminées. C'est cette matière particulaire qui est ensuite soumise aux étapes de fabrication (i) à (iii) mentionnées précédemment. Le problème technique que cherche à résoudre l'invention présentée dans cette demande de brevet est d'obtenir une matière particulaire possédant les propriétés de coulabilité et de densité apparente nécessaires à son introduction dans le moule lors de l'étape (i), tout en évitant pour cela de devoir réaliser les nombreuses et complexes opérations connues au préalable de l'homme du métier. A cet effet, il est proposé dans ladite demande de brevet d'introduire, dans une cuve contenant des éléments mobiles de compression, la poudre de dioxyde d'uranium destinée à entrer dans la composition du combustible nucléaire, puis de soumettre cette cuve à une agitation afin de former la matière particulaire visée. Une seule poudre de dioxyde d'uranium UO₂ (composant principal du combustible nucléaire) est utilisée, cette poudre de dioxyde d'uranium UO₂ étant issue d'un procédé de conversion de l'hexafluorure d'uranium. Un ou des additifs, tels que d'autres oxydes ou des substances porogènes sont parfois ajoutés à ladite poudre.

La demande de brevet FR 2 861 888 porte principalement sur une poudre de dioxyde d'uranium UO₂ issue d'un procédé de type « voie sèche ». Les procédé de type « voie sèche » sont généralement ceux pour lesquels la poudre provient d'une conversion de l'hexafluorure d'uranium (UF₆) en UO₂ par des réactions solide - gaz. Les procédés de type « voie humide » sont, eux, généralement ceux pour lesquels la poudre provient d'une conversion de UF₆ ou du nitrate d'uranium en passant par des réactions liquide - liquide et liquide - solide. Pour des raisons de gestion de la criticité et de traitement d'effluents, l'industriel préfère en général fabriquer des poudres par un procédé de type « voie sèche ».

L'objectif poursuivi dans cette demande de brevet a été uniquement de résoudre des problèmes relatifs au compactage d'une matière particulaire issue d'une seule poudre de dioxyde d'uranium, principalement obtenue par un procédé de type « voie sèche ».

Les problèmes rencontrés habituellement lors de l'étape (iii) de frittage des ébauches crues ne sont pas du tout abordés dans cette demande de brevet. Or, la frittabilité d'une poudre pose des problèmes pour les poudres de dioxyde d'uranium, en particulier pour celles issues de procédés de type « voie humide », en particulier à cause de caractéristiques de frittabilité inférieures à celles des poudres issues de procédé de type "voie sèche", bien que leurs caractéristiques de densité et de coulabilité soient supérieures.

En effet, outre le fait que cette frittabilité dépende de la taille et de la forme des cristallites de la poudre, le degré d'agrégation et/ou d'agglomération des cristallites a également une forte influence. Il s'ensuit que les masses volumiques après frittage d'ébauches frittées présentant la même masse volumique en tant qu'ébauches crues avant frittage, mais élaborées à partir de deux poudres contenant des cristallites de même taille et de même forme, peuvent être très variables si les états d'agglomération et d'agrégation entre ces poudres sont différents, par exemple parce qu'elles ont été obtenues par deux procédés de synthèse qui sont différents. Ce peut être le cas lorsqu'un procédé est de type voie humide et que l'autre procédé est de type voie sèche ; ou bien lorsque les deux procédés, bien qu'appartenant à la même voie « humide » ou « sèche », n'en sont pas moins différents dans leur mode opératoire.

Enfin, il est à noter que, en général, la frittabilité des poudres est fortement fonction de paramètres opératoires telle que la valeur de la contrainte de mise en forme appliquée sur la matière particulaire lors de l'étape de compactage.

Cette variabilité des frittabilités des poudres présente dans la pratique de nombreux inconvénients, à savoir :
a) la non-reproductibilité des dimensions de l'ébauche frittée qui rend nécessaire la rectification de l'ébauche frittée afin de lui donner ses caractéristiques définitives en terme de dimensions, ce qui rallonge et complexifie fortement le procédé permettant d'obtenir une pastille (ou toute autre forme) de combustible nucléaire prête à l'emploi. Par ailleurs, cette opération de rectification implique la perte d'une partie de la matière combustible utile qui vient d'être difficilement fabriquée. Enfin, cette opération présente un danger puisque qu'elle produit des poussières extrêmement fines d'oxydes d'actinides qui peuvent présenter des risques sanitaires de par leur toxicité (telle une poudre de PuO₂) et leur radioactivité ;
b) la disparité des comportements au frittage entre des poudres possédant un état d'agglomération et d'agrégation très variable. Cette disparité implique d'ajuster constamment les paramètres de mise en forme et/ ou de frittage.

Il apparaît donc un réel besoin de nouveaux procédés de fabrication de combustible nucléaire, sous forme de pastilles ou caramels ou autres formes, qui répondent aux problèmes et inconvénients des techniques de l'art antérieur.

Un des buts de la présente invention est précisément de fournir un procédé de fabrication d'un matériau dense via la fabrication d'une matière particulaire à partir d'au moins deux poudres contenant chacune du dioxyde d'uranium UO₂ de telle sorte que le matériau dense présente une frittabilité identique, quel que soit l'état d'agglomération et d'agrégation des poudres, et qu'il présente également une frittabilité très peu dépendante de la masse volumique des ébauches crues (autrement dit de la contrainte de mise en forme appliquée sur la matière particulaire issue des poudres).

### EXPOSÉ DE L'INVENTION

L'invention a pour objet un procédé de fabrication d'un matériau dense contenant du dioxyde d'uranium UO₂, ledit procédé comprenant les étapes successives suivantes :
a) on introduit dans un broyeur vibrant au moins deux poudres comportant chacune du dioxyde d'uranium UO₂, au moins deux poudres étant obtenues par deux procédés de synthèse différents et chaque poudre ayant une surface spécifique voisine de celle de toute autre poudre contenant du dioxyde d'uranium introduite dans ledit broyeur);
b) on réalise à l'aide dudit broyeur vibrant une agitation desdites poudres, afin de former une matière particulaire, l'intensité de broyage étant suffisante pour fragmenter les agglomérats et les agrégats présents dans les poudres sans pour autant fragmenter les cristallites présents dans les poudres, et l'énergie de broyage fournie aux poudres étant telle que pratiquement tous les agglomérats et les agrégats sont détruits ;
c) on introduit ladite matière particulaire dans un moule;
d) on applique sur ladite matière particulaire une contrainte de mise en forme, généralement de 200 à 1200 MPa, de préférence de 200 à 1000 MPa, de façon plus préférée de 200 à 600 MPa, de façon encore plus préférée de 300 à 500 MPa, afin d'obtenir un matériau compact ;
e) on procède au frittage dudit matériau compact de façon à obtenir le matériau dense.

Au sens de la présente invention, on entend par « matière particulaire » définir une matière qui contient les cristallites desdites poudres, à un degré d'agglomération ou d'agrégation diminué par, rapport à ce qu'il était dans chacune de ces poudres, la taille des cristallites n'ayant pratiquement pas varié. Par "matériau dense", on entend généralement selon l'invention un matériau issu d'une opération de densification tel qu'un frittage. Par "matériau compact" on entend généralement selon l'invention un matériau issu d'une opération de compactage. Par « surface spécifique voisine », on entend selon l'invention qu'une surface spécifique ne diffère pas de toute autre surface spécifique de plus de 10 m²/g, préférentiellement de 2 à 5 m²/g, encore plus préférentiellement de 2 à 3 m²/g.

La mesure de l'énergie de broyage fournie aux poudres est très délicate, mais directement corrélée, pour une intensité de broyage donnée, à la durée du broyage.

D'autre part, la mesure des agglomérats s'effectue généralement par tamisage à sec ou granulométrie laser si cette analyse ne conduit pas à leur destruction. De plus, on peut avoir une idée partielle de la taille et de la forme des agrégats en les observant au microscope électronique à balayage. Enfin, il n'existe pas à ce jour de quantification fiable du degré d'agrégation. C'est pourquoi l'efficacité de l'étape b) du procédé selon l'invention est mesurée en pratique de façon indirecte, par mesure de paramètres de la matière particulaire issue de l'étape b), ainsi qu'il sera explicité par la suite.

De façon pratique, l'agitation de l'étape b) est généralement effectuée en au moins une durée minimale donnée pour que se forme une matière particulaire dont la frittabilité est sensiblement constante, la compressibilité et la frittabilité de ladite matière particulaire étant de plus chacune sensiblement d'une valeur donnée, indépendante de la quantité d'agglomérats et/ou d'agrégats que contient chacune desdites poudres. La durée minimale donnée est donc généralement la durée qui, ainsi que la Demanderesse l'a constaté de façon surprenante pour une intensité de broyage donnée, est nécessaire pour obtenir avantageusement les propriétés de la matière particulaire selon l'invention. Elle est directement corrélée à une énergie minimale de broyage donnée. La frittabilité est « donnée » en ce sens que, pour une poudre de surface spécifique donnée, elle a une valeur donnée ou spécifique, que l'on constate par expérimentation. Au delà de cette durée donnée, la frittabilité de la matière particulaire est sensiblement constante, et la compressibilité continue à augmenter. La compressibilité est « donnée » en ce sens que, pour une poudre de surface spécifique donnée, elle a une valeur donnée ou spécifique ou une valeur approchante ou voisine, que l'on constate généralement par expérimentation. L'énergie de broyage, c'est-à-dire en pratique la durée de broyage pour une intensité de broyage donnée, atteint en général une valeur maximale au-delà de laquelle la compressibilité atteint une valeur constante donnée, la masse volumique du matériau compact n'évoluant plus. Cette valeur maximale est généralement associée à la compacité maximale (masse volumique du matériau compact rapportée à la densité théorique de composé considéré), qui est de 0,72 si l'on considère en première approximation que les cristallites sont des sphères.

La valeur donnée de la compressibilité et la valeur donnée de la frittabilité dépendent de paramètres propres aux caractéristiques des cristallite (taille, forme, distribution en taille) et donc indirectement à la surface spécifique des poudres, mais de façon surprenante et avantageuse, ne dépendent pas de la quantité d'agrégats et/ou d'agglomérats de la poudre.

Les proportions entre les poudres de l'étape a) sont variables. Par exemple, dans le cas de deux poudres et d'une pollution, explicitée plus loin, d'une poudre par une autre poudre, la poudre « polluante» est généralement présente dans une proportion de 0,1 à 1% en poids, par rapport au poids total des deux poudres. Dans le cas d'une première poudre issue d'un procédé de type « voie sèche » et d'une seconde poudre issue d'un procédé de type « voie humide », la première poudre est en proportion de 10 à 50% en poids par rapport au poids total des deux poudres.

Selon l'invention, les poudres, comprenant chacune du dioxyde d'uranium UO₂, peuvent avoir été introduites dans le broyeur simultanément, par exemple en tant que mélange, ou alors successivement, par introduction d'au moins une poudre à l'étape a) puis par introduction ultérieure lors de l'étape b) d'au moins une autre poudre.

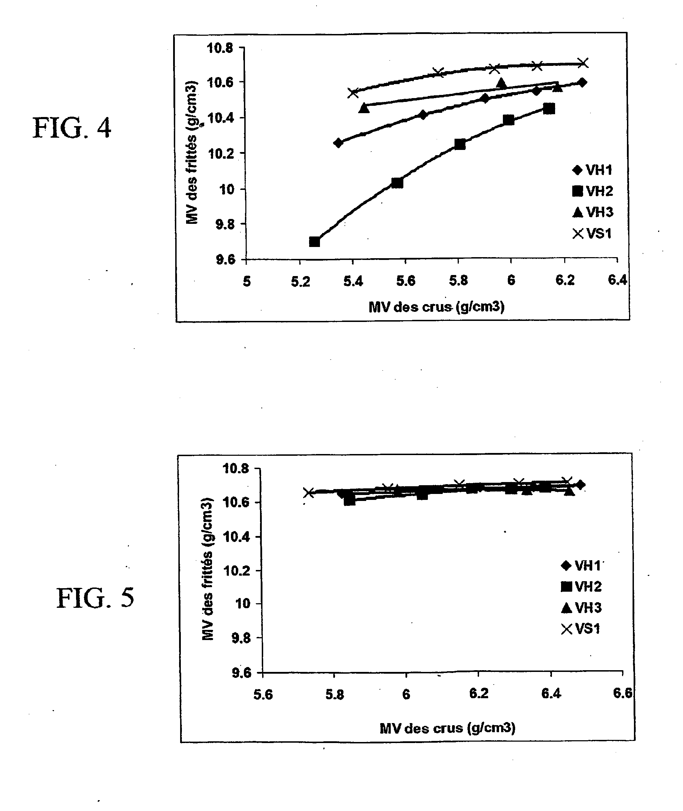

Un des points fondamentaux à l'origine de l'invention est la découverte surprenante des propriétés des matières particulairës contenant du dioxyde d'uranium UO₂ lorsque les poudres sont agitées par le broyeur vibrant avec au moins une énergie minimale de broyage donnée i.e. en pratique pendant au moins une durée minimale donnée. En effet, à partir d'une énergie minimale de broyage donnée i.e. en pratique d'une durée minimale donnée d'agitation par un broyeur d'intensité de broyage donnée, il a été mis en évidence deux propriétés surprenantes de la matière particulaire obtenue : i) la frittabilité de cette matière particulaire ne variait plus, et ce quelle que soit la durée d'agitation (et donc l'énergie de broyage) à laquelle elle était soumise, et ii) la valeur de cette frittabilité était « universelle », dans le sens où elle était conforme à une valeur qui est commune aux matières particulaires obtenues à partir de toutes les poudres qui, bien que présentant des valeurs de surfaces spécifiques voisines, n'en avaient pas moins certaines caractéristiques physiques différentes voire éloignées tel que le degré d'agglomération et le degré d'agrégation des cristallites de ces poudres. Ainsi, en particulier, le procédé selon l'invention permet de lisser les différences de frittabilité entre au moins deux poudres de dioxyde d'uranium UO₂ qui, bien que présentant entre elles une surface spécifique voisine, possèdent des degrés disparates d'agglomération et d'agrégation de leurs cristallites. Ce comportement inédit des poudres soumises au procédé de l'invention et le moyen permettant de l'obtenir n'ont jamais été mis en évidence auparavant. Ils sont illustrés par les figures 4 et 5 explicitées ci-après. Ce comportement des poudres présente plusieurs avantages décisifs en termes industriels.

Ainsi, lors de la fabrication de combustible nucléaire, sous forme de pastilles ou caramels ou autres formes, une poudre, avant une étape de compactage, est manipulée au cours de diverses opérations, ce qui implique des transferts entre deux opérations successives. Les matériels de transfert et/ou de préparation de la poudre, qui sont généralement des conteneurs ou des moyens pneumatiques ou de tapis roulants, peuvent alors retenir plus ou moins de poudre. Or, le fabricant de combustible nucléaire fait souvent appel à plusieurs fournisseurs ou types de poudres (par exemple, une poudre obtenue par un procédé de type « voie sèche » et une poudre obtenue par un procédé de type « voie humide »). Il utilise ainsi des poudres qui, bien qu'étant de même nature chimique, n'en sont pas moins d'origines différentes. Or cette origine différente se traduit le plus souvent par une grande variabilité dans l'état d'agrégation et d'agglomération des cristallites qui constituent ces poudres, et donc par une grande variabilité dans les propriétés de compressibilité et de frittabilité de ces mêmes poudres.

Afin que le matériau dense ait néanmoins des caractéristiques constantes en termes de dimensions et de masse volumique, il est généralement nécessaire : i) soit d'adapter les conditions opératoires du procédé de fabrication de la poudre pour chaque poudre, ce qui peut s'avérer complexe et coûteux, sachant qu'il peut être difficile d'évaluer à la fois le degré de pollution d'une poudre par une autre poudre mais aussi les modifications des paramètres physiques du mélange d'au moins deux poudres ainsi obtenues; ii) soit d'éviter tout mélange entre deux poudres que l'on utilise successivement, d'où la nécessité de rincer les matériels qui présentent une rétention.

Le fait d'annihiler, par le procédé selon l'invention, les différences d'agglomération et d'agrégation entre au moins deux poudres, ces deux poudres se trouvant par exemple dans un mélange résultant de la pollution d'une première poudre par une seconde poudre, conduit donc à pouvoir utiliser de manière indifférente, dans une même installation, plusieurs poudres de même nature sans se soucier du mélange involontaire entre une nouvelle poudre et une ancienne qui n'aurait pas été élaborée par le même procédé et/ou qui serait restée dans l'installation suite à une rétention. Cela représente bien évidemment un gain de productivité important.

L'invention présente donc un intérêt tout particulier pour l'obtention de combustible nucléaire, sous forme de pastilles ou caramels ou autres formes, dans des conditions souples, reproductibles et indépendantes des conditions opératoires. Ces nombreux avantages ouvrent la voie à une standardisation lors de la mise en oeuvre en conditions industrielles du procédé de frittage des poudres de combustible nucléaire.

Concernant le broyeur vibrant et les corps mobiles qu'il contient utilisés dans le procédé de l'invention, il est de même type voire identique à celui mis en oeuvre dans la demande de brevet FR 2 861 888. Un tel broyeur vibrant selon l'invention est généralement un dispositif comportant une cuve comportant des moyens de compression et de mélange, qui sont des corps mobiles, dans lequel l'agitation de la cuve est effectuée de telle sorte que la poudre qui y est présente se déplace dans le volume de la cuve suivant trois axes non coplanaires, de manière à ce que ladite poudre soit comprimée entre les corps mobiles et entre les corps mobiles et les parois de la cuve jusqu'à former une matière particulaire de densité accrue par rapport à la poudre. Il est à noter que l'homme du métier peut opérer dans une large gamme d'intensité de broyage et d'énergie de broyage pouvant être obtenues à l'aide de broyeur vibrant. Dans tous les cas, le broyeur vibrant doit permettre la fragmentation des agglomérats et des agrégats plutôt que le broyage des cristallites. L'énergie de broyage développée par le broyeur vibrant utilisé selon l'invention, peut en particulier être modifiée en changeant la masse des balourds, l'écart angulaire entre les balourds inférieur et supérieur, en augmentant la masse de médias, ou en changeant leur forme ou leur nature, ou en modifiant la quantité de poudre.

Selon une disposition préférée de l'invention, au moins une poudre est obtenue par un procédé de synthèse de type « voie humide » et au moins une autre poudre est obtenue par un procédé de synthèse de type « voie sèche ».

Selon un mode de réalisation de l'invention, au moins l'une des poudres contient au moins un oxyde choisi dans le groupe constitué par l'oxyde d'uranium U₃O₈, l'oxyde d'uranium U₃O₇, l'oxyde de plutonium PuO₂ et l'oxyde de thorium ThO₂.

Cet oxyde peut aussi être ajouté auxdites poudres avant et/ou pendant la réalisation du procédé de fabrication de l'invention (étapes a) à c)). Par exemple, il est possible dans le cadre de l'invention d'ajouter directement un tel oxyde en tant que poudre dans le broyeur.

Lorsque les poudres contiennent de l'oxyde de plutonium PuO₂, un combustible de type MOX (« Mixed Oxyde ») peut alors être avantageusement réalisé.

Selon une disposition préférée de l'invention, au moins l'une des poudres contient au moins un additif choisi parmi l'oxyde de gadolinium Gd₂O₃, oxyde d'erbium Er₂O₃, une substance porogène, telle que par exemple de l'oxalate d'ammonium ou de l'azodicarbonamide, un lubrifiant, tel que du stéarate de zinc ou du stéarate de calcium, et un agent dopant du frittage, tel que de l'oxyde de chrome. Plus généralement, un tel additif est le plus souvent au moins une substance absorbante ou modératrice des neutrons permettant de piloter les réacteurs nucléaires ou au moins une substance permettant de fabriquer (cas du lubrifiant), de maîtriser la masse volumique (cas de la substance porogène) et la microstructure (cas de l'agent dopant du frittage du combustible nucléaire mis en forme, par exemple en pastille).

Cet additif peut être ajouté auxdites poudres avant et/ou pendant la réalisation du procédé de fabrication de l'invention (étapes a) à c)).

Selon une disposition préférée de l'invention, on poursuit l'agitation par ledit broyeur de façon à augmenter la compressibilité de la matière particulaire jusqu'à une valeur prédéterminée, la frittabilité demeurant sensiblement constante.

En effet, comme cela sera illustré dans les exemples qui vont suivre, une des particularités du procédé de l'invention est que, même si la frittabilité de ladite matière particulaire a atteint pour une énergie minimale de broyage donnée, i.e. en pratique au bout d'une durée d'agitation minimale donnée, une valeur optimale qui ne peut plus varier, il reste néanmoins possible, en fonction des besoins, d'ajuster sa compressibilité en poursuivant l'agitation de cette matière lors dé l'étape b) du procédé de l'invention. Ainsi, dans un mode de réalisation de l'invention, l'agitation de l'étape b) est effectuée par ledit broyeur de façon à augmenter la compressibilité de la matière particulaire jusqu'à une valeur sensiblement constante donnée, la frittabilité demeurant sensiblement constante.

Enfin l'invention a encore pour objet un produit susceptible d'être obtenu par le procédé de l'invention.

### DESCRIPTION BREVE DES FIGURES

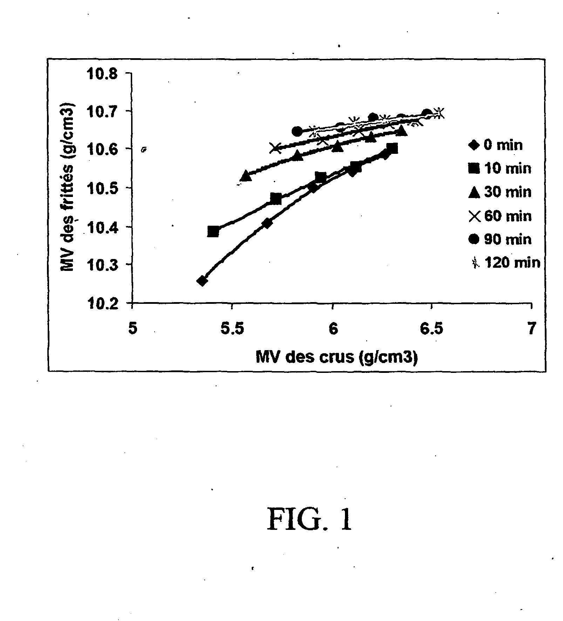

L'invention comporte aussi onze figures 1 à 11 annexées, qui sont explicitées dans les exemples 1 à 3 ci-après.

Pour toutes les figures, chaque point rapporté est généralement au moins la moyenne de six échantillons exactement identiques.
La figure 1 représente, pour différentes durées d'agitation selon l'étape b) du procédé de l'invention, l'évolution de la frittabilité d'un matériau compact (ébauche crue) contenant la matière particulaire obtenue selon l'invention à partir d'une poudre de dioxyde d'uranium UO₂. Cette figure permet à l'homme du métier de déterminer la durée minimale donnée (pour une intensité de broyage donnée) à partir de laquelle se forme la matière particulaire selon l'invention sur des poudres de dioxyde d'uranium UO₂ de même nature, à savoir que, bien que présentant entre elles une surface spécifique voisine, elles possèdent des degrés disparates d'agglomération et d'agrégation de leurs cristallites.

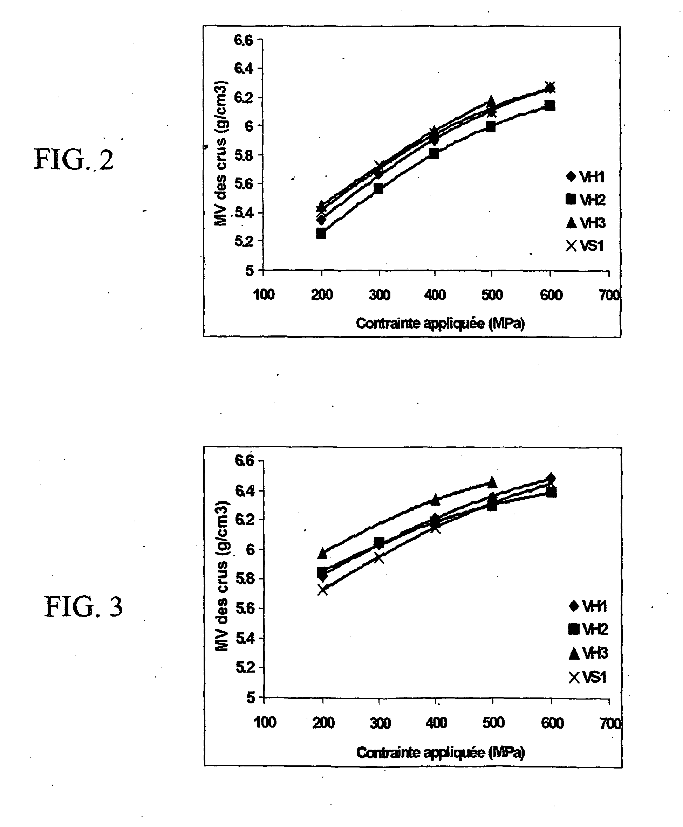

Les figures 2 et 3 représentent la compressibilité (évolution de la masse volumique d'un matériau compact (ébauche crue) en fonction des différentes valeurs de contrainte de mise en forme appliquées pour réaliser ce matériau compact) respectivement pour différentes poudres et pour les matières particulaires obtenues selon l'invention à partir de chacune de ces poudres.
Les figures 4 et 5 représentent la frittabilité (évolution de la masse volumique d'un matériau dense (ébauche frittée) en fonction de la masse volumique du matériau compact correspondant (ébauche crue) respectivement pour différentes poudres et pour les différentes matières particulaires obtenues selon l'invention à partir de ces mêmes poudres.

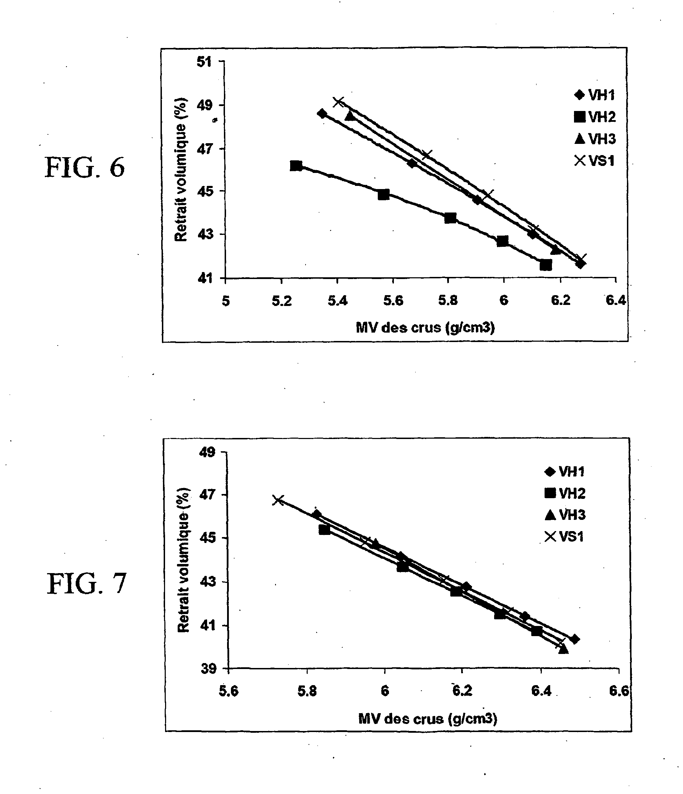

Les figures 6 et 7 représentent l'évolution du retrait volumique des matériaux denses (ébauches frittées) en fonction de la masse volumique des ébauches crues correspondantes contenant respectivement au moins une des poudres et une des matières particulaires obtenues selon l'invention à partir de ces mêmes poudres.

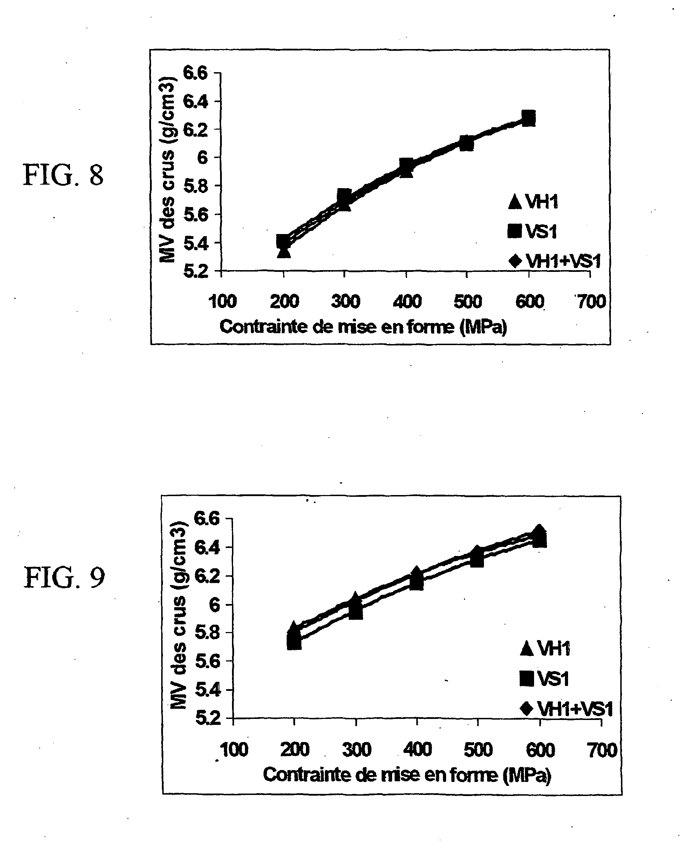

Les figures 8 et 9 représentent respectivement la compressibilité pour deux poudres et pour le mélange de ces deux poudres et la compressibilité pour les matières particulaires obtenues selon l'invention à partir de chacune de ces deux poudres et à partir de ce mélange.

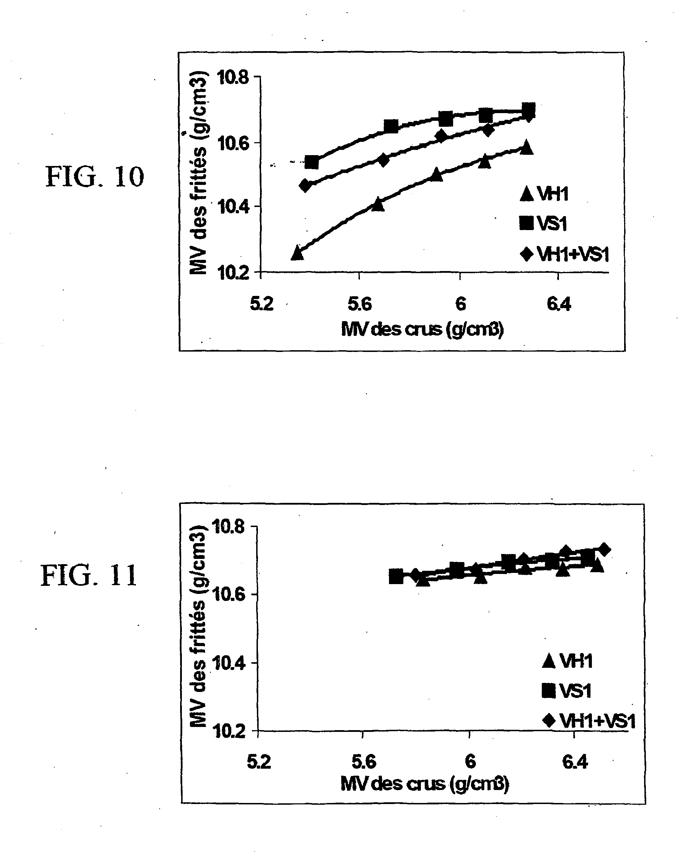

Les figures 10 et 11 représentent respectivement la frittabilité pour deux poudres et pour le mélange de ces deux poudres, et la frittabilité pour les matières particulaires obtenues selon l'invention à partir de chacune de ces deux poudres et à partir de ce mélange.

Les exemples donnés servent à illustrer l'invention et ne doivent en aucun cas être considérés comme une limitation de l'objet de l'invention.

### DESCRIPTION DETAILLEE DE L'INTENTION

L'invention sera mieux comprise à la lecture des exemples qui suivent, qui illustrent le procédé de fabrication d'un matériau dense via le procédé de fabrication d'une matière particulaire.

Les exemples qui suivent sont en tous points conformes au procédé de l'invention, en particulier lorsqu'ils ont été effectués sur une seule poudre à la fois, et non au moins deux, sachant qu'il est clair pour l'homme du métier que chacune de ces poudres exprime les propriétés de compressibilité et de frittabilité selon l'invention, même en présence d'au moins une autre poudre comme cela est le cas dans le procédé de l'invention dans lequel au moins deux poudres sont considérées. Ceci est d'ailleurs démontré dans d'autres exemples portant sur un mélange de deux poudres obtenues par deux procédés de synthèse différents.

Dans tous les exemples de réalisation qui suivent, les opérations de préparation, de mise en forme et de frittage ont été effectuées selon les mêmes conditions opératoires pour toutes les poudres (ou mélanges de poudres), et pour toutes les matières particulaires (ou mélanges de matières particulaires) obtenues selon l'invention à partir des poudres.

Ces exemples ont été réalisés sur chacune des poudres (ou mélange des poudres) de dioxyde d'uranium UO₂ synthétisées à l'aide d'un procédé de type « voie humide » (poudres VH1, VH2 et VH3) (chacune de ces poudres étant synthétisée par un procédé ADU (pour Ammonium Di Uranate de formule U₂O₇(NH₄)₂), par exemple explicité dans le brevet US 6235223), mais chaque poudre provenant de trois installations différentes qui n'ont pas les mêmes paramètres de fabrication ce qui explique leurs différences de caractéristiques) et d'un procédé de type « voie sèche » (poudre VS1). Les poudres VH1, VH2, VH3, et VS1 possèdent une surface spécifique voisine dont la valeur est respectivement de 3,8 m²/g ; 3,0 m²/g ; 3,3 m²/g et 2,1 m²/g. Les matières particulaires obtenues selon l'invention à partir des poudres VH1, VH2, VH3, et VS1 possèdent respectivement une surface spécifique dont la valeur est respectivement de 4,2 m²/g; 3,7 m²/g ; 4,2 m²/g et 2,6 m²/g. La légère augmentation de la surface spécifique constatée, lorsque l'on passe des poudres aux matières particulaires obtenues à partir des poudres, est généralement due à l'apparition des surfaces générées par la fragmentation des agrégats et des agglomérats. Il en est de même lorsque l'on passe d'un mélange de poudres à un mélange de matières particulaires obtenues à partir de ce mélange de poudres. Pour tous les exemples, chaque point rapporté dans les figures est généralement au moins la moyenne de six échantillons exactement identiques.

Le broyeur vibrant utilisé était un appareil commercialisé sous le nom de Vibromill par la Société SWECO. Il était constitué d'une cuve en polyuréthanne reposant sur des ressorts et supportant un moteur à balourd. La cuve avait la forme d'un tore de section hémicirculaire.

Le mouvement de la cuve entraînait le déplacement des corps broyants mobiles (médias) qui avaient un triple mouvement. Ils « montaient » contre la paroi externe de la cuve puis retombaient, se déplaçaient le long de la génératrice du tore et avaient un mouvement de rotation sur eux-mêmes. L'amplitude de chute des médias était fonction du balourd, la vitesse de déplacement des médias le long de la génératrice du tore était fonction de l'écart angulaire entre le balourd supérieur et le balourd inférieur.

Les conditions utilisées pour ces exemples ont été, de façon générale, celles recommandées par la société SWECO. Ainsi, les paramètres de réglage de l'intensité des vibrations étaient la masse du balourd inférieur et l'écart angulaire entre les deux balourds. Le balourd inférieur était constitué de cinq plaques de masse totale 575 g. L'écart angulaire entre le balourd inférieur et le balourd supérieur était de 60°. La masse de médias utilisés était de 36 kg ; la masse de poudre (ou de mélange de poudres) broyée lors des exemples était de 4 kg. La cuve était fermée par un couvercle métallique. Une ouverture sur ce couvercle permettait l'introduction de la ou des poudre(s). L'étanchéité entre la cuve et le couvercle était assurée par des joints toriques.

Avant leur mise en forme (opération de compactage), une opération de préparation des poudres a été effectuée : les poudres ont été lubrifiées avec ajout de 0,3% en masse de stéarate de zinc pendant 10 minutes à 20 tours/minutes à l'aide d'un mélangeur doux (de marque Turbula). Le mélange ainsi obtenu a été alors introduit dans un moule cylindrique. Le diamètre du moule était égal à 10 mm et sa hauteur était fixée à 30 mm. Le remplissage du moule a été réalisé manuellement en se terminant par un arasement. Ce mélange a ensuite été compacté et mis en forme par l'application d'une contrainte de mise en forme, à savoir une contrainte qui pouvait varier dans une gamme allant de préférence de 200 à 600 MPa. Comme on le verra par la suite, l'un des avantages du procédé selon l'invention, qui le rend particulièrement robuste et reproductible, est qu'il permet justement de lisser les différences de frittabilité de poudres compactées sous des contraintes de mise en forme variables. Dès lors, la valeur de la contrainte de mise en forme, tant qu'elle reste dans la gamme précitée, n'a présenté sensiblement aucune influence sur la frittabilité pour l'obtention d'un matériau dense selon l'invention, pour les poudres testées.

L'ébauche crue obtenue à l'issue de l'étape précédente de compactage a ensuite été soumise à une étape de frittage qui a consisté à chauffer l'ébauche crue à partir de la température ambiante jusqu'à 1000°C selon une vitesse de 350°C/h, puis à maintenir cette température de 1000°C pendant une heure. Ensuite, cette température de 1000°C a été augmentée selon une vitesse de 350°C/h jusqu'à 1700°C, température qui a été maintenue pendant 4 heures. Enfin, un refroidissement a été effectué à une vitesse de 300°C/h. L'atmosphère de frittage était de l'hydrogène sec. Une atmosphère légèrement oxydante ou réductrice humidifiée aurait pu également convenir, du moment que l'atmosphère en fin de traitement permette d'obtenir une phase UO₂ stoechiométrique.

### Exemple 1: détermination de la durée minimale donnée (correspondant à une énergie minimale de broyage donnée) pendant laquelle l'agitation doit être effectuée pour que se forme la matière particulaire selon l'invention.

Afin de déterminer selon l'invention la durée minimale donnée (correspondant à une énergie minimale de broyage donnée) pendant ou au-delà de laquelle ladite agitation doit être effectuée pour que se forme ladite matière particulaire, il a été procédé à une étude préliminaire qui a consisté à broyer une poudre de dioxyde d'uranium UO₂ pendant une durée variable. Pour chaque durée de broyage, un échantillon de poudre a été prélevé, puis à l'occasion de sa mise en forme (opération de compactage), la masse volumique de l'ébauche crue a été calculée à partir de la pesée et de la métrologie des ébauches crues. Ensuite, un frittage a été réalisé à l'issue duquel une ébauche frittée a été obtenue, dont on a mesuré la masse volumique dans les mêmes conditions. A l'issue de ces opérations, l'évolution de la masse volumique de l'ébauche crue en fonction de la masse volumique de l'ébauche frittée a été portée, pour chaque durée de broyage, sur une figure telle que celle qui été réalisé pour la poudre VH2 et qui est représentée à titre d'exemple sur la figure 1. Afin de déterminer la durée minimale donnée selon l'invention, il a suffi alors de déterminer à partir de quelle durée de broyage la frittabilité de la poudre devenait sensiblement constante. Dans le cadre de la poudre VH2, il a été estimé que cette durée était de 90 minutes, aucune évolution significative de la frittabilité étant constatée pour une durée de 120 minutes, comme cela est illustré sur la figure 1. Bien entendu, l'homme de métier est à même, par un test de même nature, de réaliser une mesure de durée minimale donnée (correspondant à une énergie minimale de broyage donnée), pour une intensité de broyage donnée et pour une poudre donnée.

### Exemple 2 : caractérisation de la propriété de compressibilité des matières particulaires obtenues selon l'invention sur les poudres VH1, VH2, VH3 et VS1.

Les poudres VH1, VH2, VH3 et VS1, et les matières particulaires obtenues selon l'invention à partir de ces poudres ont ensuite subi les opérations de préparation et de mise en forme dans les conditions opératoires précitées afin de former des ébauches crues dont chaque masse volumique a été mesurée selon le mode opératoire précédent. L'évolution de la masse volumique de ces huit ébauches crues en fonction de la contrainte de mise en forme appliquée a été reportée sur les figures 2 et 3.

L'ensemble des opérations décrites au paragraphe précédent a été renouvelé sur un mélange de poudres constitué en poids de 50% de VH1 + 50% de VS1, ainsi que sur la matière particulaire obtenue selon l'invention à partir de ce mélange. Le mélange possédait une surface spécifique de 2,64 m²/g et la matière particulaire une surface spécifique de 3,21 m²/g.

On a constaté (cf. figure 2) que la masse volumique de l'ébauche crue contenant les poudres a augmenté avec la contrainte de mise en forme. Sa valeur était pratiquement semblable pour les poudres VH 1, VH3 et VS1, seule celle de la poudre VH2 était légèrement inférieure à celle des autres. Une constatation similaire a été faite pour le mélange des poudres VH1+VS1 (cf. figure 8).

Pour ce qui est des matières particulaires, toutes issues d'une étape b) pour laquelle la durée minimale donnée était de 90 minutes, on a constaté sur la figure 3 une augmentation de la compressibilité pour toutes ces matières. Cette augmentation était d'environ 4% pour les basses contraintes (200 MPa) et de 2% pour les contraintes les plus élevées (600 MPa). Une constatation similaire a été faite pour le mélange des poudres VH1+VS1 (cf. figure 9).

Il est donc à noter que, pour une contrainte de mise en forme donnée et pour une durée donnée d'agitation, ici égale à la durée minimale donnée, la compressibilité de ces différentes matières est sensiblement constante après application du procédé selon l'invention, et pour toutes les poudres (ou mélange de poudres) l'augmentation de masse volumique en fonction de la contrainte appliquée est moins importante. Cette moins grande dépendance de la masse volumique des ébauches crues en fonction de la contrainte appliquée permet avantageusement de réduire l'écart à la cylindricité mentionnée auparavant, dans le cas de mise en forme de combustible nucléaire en pastille sensiblement cylindrique.

### Exemple 3: caractérisation de la frittabilité des matières particulaires obtenues selon l'invention à partir des poudres VH1, VH2, VH3 et VS1.

Les quatorze ébauches crues (dont deux contenant le mélange de poudres VH1+VS1) obtenues dans l'exemple 2 ont été soumises à une opération de frittage dans les conditions opératoires précitées afin de former des ébauches frittées. La masse volumique de chaque ébauche crue et la masse volumique de chaque ébauche frittée ont été mesurées selon le mode opératoire précédent.

La frittabilité a été reportée sur les figures 4 et 5 pour les ébauches précitées contenant une seule poudre et sur les figures 10 et 11 pour les ébauches précitées contenant un mélange de poudres.

On a constaté sur la figure 4 que les poudres, sur lesquelles l'étape b) du procédé selon l'invention n'a pas été appliquée, ont présenté des frittabilités très différentes les unes des autres alors que leur compressibilité était proche les unes des autres. Une constatation similaire a été faite pour le mélange des poudres VH1+VS1 (cf. figure 10).

Par contre, on a constaté sur la figure 5 que l'application pendant 90 minutes de l'étape b) du procédé de l'invention a conduit à une frittabilité sensiblement constante et sensiblement identique, quelle que soit la matière particulaire considérée. Une constatation similaire a été faite pour le mélange des poudres VH1+VS1 (cf. figure 11).

Par ailleurs, quelle que soit la masse volumique de l'ébauche crue élaborée à partir de cette même matière particulaire, la masse volumique des ébauches frittées correspondantes était de 10,61 à 10,71 g/cm³, à savoir une variation de moins de 1% de la masse volumique. Cet écart est inférieur à la tolérance sur la masse volumique généralement spécifiée pour la fabrication de matière combustible nucléaire, sous forme de pastilles ou caramels ou autres formes. De plus, si on restreint le domaine de contrainte appliquée de 300 à 500 MPa, qui est le domaine de contrainte généralement utilisé industriellement, les masses volumiques frittées sont toutes de 10,66 à 10,70 g/cm³.

Il ressort donc de ces différents exemples, en particulier des figures 3 et 5 ainsi que des figures 9 et 11, qu'une des particularités du procédé de l'invention, est que, même si la frittabilité de la matière particulaire a atteint au bout d'une durée minimale donnée d'agitation une valeur optimale qui ne peut sensiblement plus varier, il reste néanmoins possible, en fonction des besoins, d'ajuster sa compressibilité en poursuivant l'agitation de cette matière.

On peut dès lors ajuster la compressibilité des poudres (ou du mélange des poudres) sans modifier la masse volumique de l'ébauche frittée qui est généralement une valeur spécifiée par le concepteur. Ainsi, si on change de poudre (ou de mélange de poudres) dans le procédé de fabrication de matière combustible, afin de garder constante la masse volumique de l'ébauche frittée, soit i) on adapte la durée de broyage et on ne change pas la contrainte de mise en forme pour obtenir la même masse volumique de l'ébauche crue, soit ii) on garde la durée de broyage constante (supérieure ou égale à la durée minimale donnée selon l'invention) et on adapte la contrainte de mise en forme pour obtenir une densité en cru constante (voir figure 3). La souplesse et la robustesse du procédé sont donc remarquables.

Cette très faible dépendance de la masse volumique des ébauches frittées en fonction de la masse volumique des ébauches crues permet avantageusement de maîtriser le dimensionnel sans modifier la masse volumique des ébauches frittées. Par ailleurs, le retrait n'étant généralement fonction que de la masse volumique crue de la poudre (ou du mélange de poudres) considérée, il suffit d'anticiper le retrait au frittage dans les côtes de l'ébauche crue, par exemple en faisant en sorte d'obtenir une ébauche crue qui, par rapport à l'ébauche frittée, a des dimensions supérieures d'une valeur correspondant au retrait. Ainsi, après frittage, quelle que soit l'origine de la poudre (ou les origines des poudres constituant le mélange de poudres), on obtient selon l'invention un objet à la côte ou le plus proche possible de la côte (réduction des besoins de rectification) en ne modifiant que très faiblement, et dans l'intervalle spécifié, la masse volumique des ébauches frittées. La constance, pour une masse volumique d'ébauche crue donnée, dans la valeur du retrait pour différentes poudres lorsque celles-ci sont agitées selon le procédé de l'invention, est illustrée dans les figures 6 et 7.

Ceci représente un avantage décisif, en particulier en terme de productivité et de sécurité, lors de la mise en oeuvre de l'invention pour la fabrication de combustible nucléaire, sous forme de pastilles ou caramels ou autres formes, en conditions industrielles.

## Revendications

1. Procédé de fabrication d'un matériau dense contenant du dioxyde d'uranium UO₂, ledit procédé comprenant les étapes successives suivantes :
a) on introduit dans un broyeur au moins deux poudres comportant chacune du dioxyde d'uranium UO₂, au moins deux poudres étant obtenues par deux procédés de synthèse différents ;
b) on réalise à l'aide dudit broyeur une agitation desdites poudres, afin de former une matière particulaire ;
c) on introduit ladite matière particulaire dans un moule ;
d) on applique sur ladite matière particulaire une contrainte de mise en forme, afin d'obtenir un matériau compact ;
e) on procède au frittage dudit matériau compact de façon à obtenir le matériau dense ;
ledit procédé étant **caractérisé en ce que** :
- ledit broyeur est un broyeur vibrant ;
- chaque poudre a une surface spécifique voisine de celle de toute autre poudre contenant du dioxyde d'uranium introduite dans ledit broyeur ;
- on réalise à l'aide dudit broyeur vibrant l'agitation desdites poudres, afin de former une matière particulaire, de telle sorte que l'intensité de broyage est suffisante pour fragmenter les agglomérats et les agrégats présents dans les poudres sans pour autant fragmenter les cristallites présents dans les poudres, et l'énergie de broyage fournie aux poudres est telle que pratiquement tous les agglomérats et les agrégats sont détruits.

2. Procédé selon la revendication 1, dans lequel au moins une poudre est obtenue par un procédé de synthèse de type « voie humide » et au moins une autre poudre est obtenue par un procédé de type « voie sèche ».

3. Procédé selon l'une des revendications 1 ou 2, dans lequel au moins l'une des poudres contient au moins un oxyde choisi dans le groupe constitué par l'oxyde d'uranium U₃O₈, l'oxyde d'uranium U₃O₇, l'oxyde de plutonium PuO₂ et l'oxyde de thorium ThO₂.

4. Procédé selon l'une quelconque des revendications 1 à 3, dans lequel au moins l'une des poudres contient au moins un additif choisi parmi l'oxyde de gadolinium Gd₂O₃, l'oxyde d'erbium Er₂O₃, une substance porogène, un lubrifiant et un agent dopant du frittage.

5. Procédé selon l'une quelconque des revendications précédentes, dans lequel l'agitation de l'étape b) est effectuée en au moins une durée minimale donnée pour que se forme une matière particulaire dont la frittabilité est sensiblement constante, la compressibilité et la frittabilité de ladite matière particulaire étant de plus chacune sensiblement d'une valeur donnée, indépendante de la quantité d'agglomérats et/ou d'agrégats que contient chacune desdites poudres.

6. Procédé selon l'une quelconque des revendications 1 à 4, dans lequel l'agitation de l'étape b) est effectuée par ledit broyeur de façon à augmenter la compressibilité de la matière particulaire jusqu'à une valeur sensiblement constante donnée, la frittabilité demeurant sensiblement constante.

7. Procédé selon l'une quelconque des revendications précédentes, dans lequel l'étape d) est effectuée sous une contrainte de 200 à 1200 MPa, de préférence de 200 à 1000 MPa, de façon plus préférée de 200 à 600 MPa, de façon encore plus préférée de 300 à 500 MPa.

8. Procédé selon l'une quelconque des revendications précédentes, dans lequel chaque poudre a une surface spécifique qui diffère de plus de 10 m²/g, préférentiellement de 2 à 5 m²/g, encore plus préférentiellement de 2 à 3 m²/g, de celle de toute autre poudre de dioxyde d'uranium introduite dans ledit broyeur.

## Claims

1. A process for the manufacture of a dense material containing uranium dioxide UO₂, said process comprising the consecutive steps of:
a) introducing at least two powders each comprising uranium dioxide UO₂ into a grinder, wherein at least two powders are provided by two different synthesis routes;
b) shaking said powders by means of said vibrating grinder so as to form a particulate material;
c) introducing said particulate material into a mould;
d) applying a shaping stress to said particulate material in order to obtain a compacted material;
e) carrying out the sintering of said compacted material so as to obtain the dense material;
wherein said process is **characterized in that**:
- said grinder is a vibrating grinder;
- each powder has a specific surface area close to that of any other uranium-dioxide containing powder introduced into said grinder;
- shaking said powders by means of said vibrating grinder so as to form a particulate material, the grinding intensity being sufficient to break up the agglomerates and the aggregates in the powders without at the same time breaking up the crystallites in the powders, and the grinding energy provided to the powders being such that substantially all of the agglomerates and aggregates are destroyed;

2. The process according to claim 1, wherein at least one powder is obtained by a synthesis process of the "wet route" type, and at least one other powder is obtained by a synthesis process of the "dry route" type.

3. The process according to claim 1 or 2, wherein at least one of the powders contains at least one oxide chosen from the group consisting of uranium oxide U₃O₈, uranium oxide U₃O₇, plutonium oxide PuO₂, and thorium oxide ThO₂.

4. The process according to any one of claims 1 to 3, wherein at least one of the powders contains at least one additive selected from among gadolinium oxide Gd₂O₃, erbium oxide Er₂O₃, a pore forming substance, a lubricant and a sintering promoter.

5. The process according to any one of the preceding claims, wherein the shaking of step b) is carried out over at least a given minimum duration so as to form a particulate material having a substantially constant sinterability, the compressibility and sinterability of said particulate material having moreover substantially given values, independent from the amount of agglomerates and/or aggregates contained in each of said powders.

6. The process according to any one of claims 1 to 4, wherein the shaking of step b) is carried out by said grinder so as to increase the compressibility of the particulate material up to a given, substantially constant value, while sinterability remains substantially constant.

7. The process according to any one of the preceding claims, wherein step d) is carried out under a stress ranging from 200 to 1200 MPa, preferably from 200 to 1000 MPa, more preferably from 200 to 600 MPa, and even more preferably from 300 to 500 MPa.

8. The process according to any of the preceding claims, wherein each powder has a specific surface area, which differs by more than 10 m²/g, preferably by 2 to 5 m²/g, more preferably by 2 to 3 m²/g, from that of any other uranium dioxide powder introduced into said grinder.

## Patentansprüche

1. Verfahren zur Herstellung eines dichten Materials, welches Urandioxid UO₂ enthält, wobei dieses Verfahren die aufeinander folgenden Schritte umfasst:
a) in eine Zerkleinerungsvorrichtung werden mindestens zwei Pulver eingebracht, wobei jedes dieser Pulver Urandioxid UO₂ enthält und wobei mindestens zwei Pulver durch verschiedene Herstellungsverfahren hergestellt werden;
b) mit Hilfe besagter Zerkleinerungsvorrichtung werden diese Pulver geschüttelt, um ein teilchenförmiges Material zu erhalten;
c) besagtes teilchenförmiges Material wird in eine Pressform gegeben;
d) auf besagtes teilchenförmiges Material wird ein formgebender Druck ausgeübt, um ein kompaktes Material zu erhalten;
e) besagtes kompaktes Material wird gesintert, um ein dichtes Material zu erhalten;
wobei das Verfahren **dadurch gekennzeichnet ist, dass**
- die Zerkleinerungsvorrichtung ein Schwingschleifer ist;
- jedes Pulver eine spezifische Oberfläche aufweist, die der Oberfläche von allen weiteren Urandioxid enthaltenden Pulvern gleicht, die in besagte Zerkleinerungsvorrichtung eingebracht werden;
- mit Hilfe von besagtem Schwingschleifer werden diese Pulver - um ein teilchenförmiges Material zu formen- derart geschüttelt, dass die Stärke der Zerkleinerung ausreicht, um die Agglomerate und Aggregate, die in den Pulvern vorhanden sind, zu zerstückeln ohne dabei die Kristallite, die in den Pulvern vorhanden sind, zu zerstören und wobei die Stärke der Zerkleinerung derart ist, dass praktisch alle Agglomerate und Aggregate entfernt werden.

2. Verfahren gemäss Anspruch 1, wobei mindestens ein Pulver über den Syntheseweg "feuchtes Verfahren" erhalten wird und mindestens ein weiteres Pulver über den Syntheseweg "trockenes Verfahren" erhalten wird.

3. Verfahren gemäss einem der Ansprüche 1 oder 2, wobei mindestens ein Pulver mindestens ein Oxid enthält, welches ausgewählt ist aus der Gruppe bestehend aus Uraniumoxid U₂O₈, Uraniumoxid U₃O₇, Plutoniumoxid PuO₂ und Thoriumoxid ThO₂.

4. Verfahren gemäss einem der Ansprüche 1-3, wobei mindestens eines der Pulver mindestens ein Additiv enthält, welches ausgewählt ist aus Galodiniumoxid Gd₂O₃ Erbiumoxid Er₂O₃, einer Poren bildenden Substanz, einem Schmierstoff und einem Sinterpromoter.

5. Verfahren gemäss einem der vorherigen Ansprüche, wobei das Schütteln gemäss Verfahrensschritt b) in einer vorgegebenen Minimalzeit durchgeführt wird, damit sich ein teilchenförmiges Material bildet, welches eine im Wesentlichen konstante Sinterfähigkeit aufweist und wobei die Pressbarkeit und Sinterfähigkeit von besagtem teilchenförmigen Material im Wesentlichen vorgegebenen Werten entspricht, welche von der Anzahl der Agglomerate und/oder Aggregate, die in jedem dieser Pulver enthalten sind, unabhängig sind.

6. Verfahren gemäss einem der Ansprüche 1 bis 4, wobei das Schütteln durch die Zerkleinerungsvorrichtung gemäss Verfahrensschritt b) derart ausgeführt wird, dass die Pressbarkeit des teilchenförmigen Materials bis zu einem vorgegebenen, im Wesentlichen konstanten Wert erhöht wird, während die Sinterfähigkeit im Wesentlichen konstant bleibt.

7. Verfahren gemäss einem der vorhergehenden Ansprüche, wobei Verfahrensstufe d) bei einem Druck zwischen 200 bis 1200MPa ausgeführt wird, vorzugsweise zwischen 200 bis 1000MPa, besonders bevorzugt zwischen 200 bis 600MPa und ganz besonders bevorzugt zwischen 300 und 500MPa.

8. Verfahren gemäss einem der vorhergehenden Ansprüche, wobei jedes Pulver eine spezifische Oberfläche hat, welche sich durch mehr als 10m²/g, vorzugsweise 2-5m²/g, besonders bevorzugt 2-3m²/g unterscheidet von derjenigen Oberfläche eines weiteren Urandioxid Pulvers, welches in besagte Zerkleinerungsvorrichtung eingebracht wird.
